# EUROPEAN PATENT APPLICATION

(11) **EP 3 232 637 A1**
(43) Date of publication of application: **18.10.2017**
(21) Application number: 15876478.7
(22) Date of filing: 09.01.2015
(51) Int. Cl.: H04L 29/06

(54) **NETWORK ENTITY AND SERVICE POLICY MANAGEMENT METHOD**

(71) Applicant: Huawei Technologies Co., Ltd., Longgang District Shenzhen, Guangdong 518129 (CN)
(72) Inventor: WANG, Shuo, Shenzhen Guangdong 518129 (CN); MA, Jingwang, Shenzhen Guangdong 518129 (CN)
(74) Representative: Gill Jennings & Every LLP
(86) International application number: PCT/CN2015/070407
(87) International publication number: WO 2016/109970

(57) **Abstract**

The present invention discloses a network entity and a service policy management method, and pertains to the field of network technologies. The method includes: receiving, by a policy and charging rules function entity, a service request sent by an application server; generating a PCC policy and a service chain policy according to the service request; generating a PCC rule and a service chain control rule; and sending the PCC rule and the service chain control rule to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

## Description

### TECHNICAL FIELD

The present invention relates to the field of network technologies, and in particular, to a network entity and a service policy management method.

### BACKGROUND

For many enterprise services, a service flow is controlled by a service policy on both a core network side and a local area network side. The service flow is controlled by a policy and charging control (English full name: policy and charging control, PCC for short) policy on the core network side and is controlled by a service chain policy on the local area network side. In the prior art, the service chain policy control is generally applied to only a Gi local area network (Gi Local area network) and has not been applied to a 3GPP network. Therefore, the PCC policy control for the service flow and the service chain policy control for the service flow need to be separately managed. A PCC policy is formulated by a policy and charging rules function (English full name: policy and charging rule function, PCRF) entity and is delivered to an enforcement entity of the PCC policy, for example, a packet data network gateway (English full name: packet data network gateway, P-GW for short) or a PCEF (English full name: policy and charging enforcement function, PCEF for short) entity. A service chain policy is generated by a service chain controller in the Gi local area network and is delivered to a control device configured to control all network nodes the service flow passes.

The prior art has the following disadvantages:
The PCC policy control and the service chain policy control are separately managed in different networks. Consequently, PCC policy control information and service chain policy control information need to be separately transmitted between an application server of an enterprise and a network side. Therefore, signaling resources are excessively occupied, and system performance is affected.

### SUMMARY

To resolve a prior-art problem that signaling resources are excessively occupied because PCC policy control and service chain policy control are managed in different networks, embodiments of the present invention provide a network entity and a service policy management method. The technical solutions are as follows:
According to a first aspect, a policy and charging rules function entity is provided, where the policy and charging rules function entity includes:
   a receiving module, configured to receive a service request sent by an application server;
   a policy generation module, configured to generate a service policy according to the service request, where the service policy includes at least one network policy, and the at least one network policy includes a Policy and Charging Control PCC policy and a service chain policy;
   a rule generation module, configured to generate a network rule according to the service policy; and
   a sending module, configured to send the network rule to a corresponding network rule enforcement device, where the network rule is a PCC rule or a service chain control rule, or includes both a PCC rule and a service chain control rule.

In a first possible implementation of the first aspect, the rule generation module is configured to generate the PCC rule according to the PCC policy; and
the sending module is configured to send the PCC rule to a policy and charging enforcement function entity.

With reference to the first aspect or the first possible implementation of the first aspect, in a second possible implementation of the first aspect, the rule generation module is configured to generate the service chain control rule according to the service chain policy; and
the sending module is configured to send the service chain control rule to a flow classifier.

With reference to the first aspect, the first possible implementation of the first aspect, or the second possible implementation of the first aspect, in a third possible implementation of the first aspect, the PCC rule includes a network policy identifier of the PCC policy, and the service chain control rule includes a network policy identifier of the service chain policy.

With reference to any one of the first aspect, or the first to the third possible implementations of the first aspect, in a fourth possible implementation of the first aspect, the policy and charging rules function entity further includes:
a path generation module, configured to generate a service chain path corresponding to the service request; where
the sending module is configured to send the service chain path to a Gi local area network control device.

With reference to any one of the first aspect, or the first to the fourth possible implementations of the first aspect, in a fifth possible implementation of the first aspect, the receiving module is configured to receive a service information query request sent by the application server, where the service information query request is used to request to query service information corresponding to the service policy;
the sending module is configured to send an information query request to a service charging function entity, where the information query request is used to request to query service information corresponding to the service policy;
the receiving module is configured to receive the service information that is corresponding to the service policy and that is returned by the service charging function entity according to the information query request; and
the sending module is configured to send, to the application server, the service information corresponding to the service policy, where
the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy.

With reference to the fifth possible implementation of the first aspect, in a sixth possible implementation of the first aspect, the sending module is configured to send a correspondence between a service policy identifier of the service policy and a network policy identifier of the at least one network policy to the service charging function entity before the receiving module receives the service information query request sent by the application server; and
the sending module is configured to send, to the service charging function entity, an information query request that includes the service policy identifier, so that the service charging function entity determines, according to the service policy identifier, the service information corresponding to the service policy.

With reference to the fifth possible implementation of the first aspect, in a seventh possible implementation of the first aspect, the sending module is configured to send, to the service charging function entity, an information query request that includes a network policy identifier of the at least one network policy, so that the service charging function entity determines, according to the network policy identifier of the at least one network policy, the service information corresponding to the service policy, where
the network policy identifier of the at least one network policy includes the network policy identifier of the PCC policy and the network policy identifier of the service chain policy.

According to a second aspect, a policy and charging rules function entity is provided, where the policy and charging rules function entity includes: a processor, a memory, a transmitter, and a receiver; the memory is configured to store one or more instructions, where the one or more instructions are executed by the processor;
the processor is configured to control the receiver to receive a service request sent by an application server;
the processor is configured to generate a service policy according to the service request, where the service policy includes at least one network policy, and the at least one network policy includes a Policy and Charging Control PCC policy and a service chain policy;
the processor is configured to generate a network rule according to the service policy; and
the processor is configured to control the transmitter to send the network rule to a corresponding network rule enforcement device, where the network rule is a PCC rule or a service chain control rule, or includes both a PCC rule and a service chain control rule.

In a first possible implementation of the second aspect, the processor is configured to generate the PCC rule according to the PCC policy; and
the processor is configured to control the transmitter to send the PCC rule to a policy and charging enforcement function entity.

With reference to the second aspect or the first possible implementation of the second aspect, in a second possible implementation of the second aspect, the processor is configured to generate the service chain control rule according to the service chain policy; and
the processor is configured to control the transmitter to send the service chain control rule to a flow classifier.

With reference to the second aspect, the first possible implementation of the second aspect, or the second possible implementation of the second aspect, in a third possible implementation of the second aspect, the PCC rule includes a network policy identifier of the PCC policy, and the service chain control rule includes a network policy identifier of the service chain policy.

With reference to any one of the second aspect, or the first to the third possible implementations of the second aspect, in a fourth possible implementation of the second aspect,
the processor is further configured to generate a service chain path corresponding to the service request; and
the processor is configured to control the transmitter to send the service chain path to a Gi local area network control device.

With reference to any one of the second aspect, or the first to the fourth possible implementations of the second aspect, in a fifth possible implementation of the second aspect, the processor is configured to control the receiver to receive a service information query request sent by the application server, where the service information query request is used to request to query service information corresponding to the service policy;
the processor is configured to control the transmitter to send an information query request to a service charging function entity, where the information query request is used to request to query service information corresponding to the service policy;
the processor is configured to control the receiver to receive the service information that is corresponding to the service policy and that is returned by the service charging function entity according to the information query request; and
the processor is configured to control the transmitter to send, to the application server, the service information corresponding to the service policy, where
the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy.

With reference to the fifth possible implementation of the second aspect, in a sixth possible implementation of the second aspect, the processor is configured to: before controlling the receiver to receive the service information query request sent by the application server, control the transmitter to send a correspondence between a service policy identifier of the service policy and a network policy identifier of the at least one network policy to the service charging function entity; and
the processor is configured to control the transmitter to send, to the service charging function entity, an information query request that includes the service policy identifier, so that the service charging function entity determines, according to the service policy identifier, the service information corresponding to the service policy.

With reference to the fifth possible implementation of the second aspect, in a seventh possible implementation of the second aspect, the processor is configured to control the transmitter to send, to the service charging function entity, an information query request that includes a network policy identifier of the at least one network policy, so that the service charging function entity determines, according to the network policy identifier of the at least one network policy, the service information corresponding to the service policy, where
the network policy identifier of the at least one network policy includes the network policy identifier of the PCC policy and the network policy identifier of the service chain policy.

According to a third aspect, a service charging function entity is provided, where the service charging function entity includes:
a receiving module, configured to receive an information query request sent by a policy and charging rules function entity, where the information query request is used to request to query service information corresponding to a service policy, the service policy includes at least one network policy, and the at least one network policy includes a Policy and Charging Control PCC policy and a service chain policy;
a service information determining module, configured to determine, according to the information query request, the service information corresponding to the service policy, where the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy; and
a sending module, configured to return, to the policy and charging rules function entity, the service information corresponding to the service policy.

In a first possible implementation of the third aspect, the receiving module is configured to: before the service information determining module determines, according to the information query request, the service information corresponding to the service policy, receive service information that is corresponding to the PCC policy and that is sent by a policy and charging enforcement function entity, where the service information corresponding to the PCC policy includes at least one of the charging information corresponding to the PCC policy or the network resource usage information corresponding to the PCC policy.

With reference to the third aspect or the first possible implementation of the third aspect, in a second possible implementation of the third aspect, the receiving module is configured to: before the service information determining module determines, according to the information query request, the service information corresponding to the service policy, receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain; or
the receiving module is configured to: before the service information determining module determines, according to the information query request, the service information corresponding to the service policy, receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, where
the service information corresponding to the uplink data flow includes at least one of charging information corresponding to the uplink data flow or network resource usage information corresponding to the uplink data flow; the service information corresponding to the downlink data flow includes at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

With reference to the third aspect, the first possible implementation of the third aspect, or the second possible implementation of the third aspect, in a third possible implementation of the third aspect, the information query request includes a service policy identifier corresponding to the service policy;
the receiving module is configured to: before the service information determining module determines, according to the information query request, the service information corresponding to the service policy, receive a correspondence between a network policy identifier of the at least one network policy and the service policy identifier that is of the service policy and that is sent by the PCRF entity; and
the service information determining module is configured to determine the network policy identifier of the at least one network policy according to the service policy identifier that is of the service policy and that is included in the information query request and the correspondence between the service policy identifier of the service policy and the network policy identifier of the at least one network policy, and obtain, according to the network policy identifier of the at least one network policy, the service information corresponding to the service policy.

With reference to the third aspect, the first possible implementation of the third aspect, or the second possible implementation of the third aspect, in a fourth possible implementation of the third aspect, the information query request includes a network policy identifier of the at least one network policy, and
the service information determining module is configured to obtain, according to the network policy identifier of the at least one network policy, the service information corresponding to the service policy.

According to a fourth aspect, a service charging function entity is provided, the service charging function entity includes: a processor, a memory, a transmitter, and a receiver; the memory is configured to store one or more instructions, where the one or more instructions are executed by the processor;
the processor is configured to control the receiver to receive an information query request sent by a policy and charging rules function entity, where the information query request is used to request to query service information corresponding to a service policy, the service policy includes at least one network policy, and the at least one network policy includes a Policy and Charging Control PCC policy and a service chain policy;
the processor is configured to determine, according to the information query request, the service information corresponding to the service policy, where the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy; and
the processor is configured to control the transmitter to return, to the policy and charging rules function entity, the service information corresponding to the service policy.

In a first possible implementation of the fourth aspect, the processor is configured to: before determining, according to the information query request, the service information corresponding to the service policy, control the receiver to receive service information that is corresponding to the PCC policy and that is sent by a policy and charging enforcement function entity, where the service information corresponding to the PCC policy includes at least one of the charging information corresponding to the PCC policy or the network resource usage information corresponding to the PCC policy.

With reference to the fourth aspect or the first possible implementation of the fourth aspect, in a second possible implementation of the fourth aspect, the processor is configured to: before determining, according to the information query request, the service information corresponding to the service policy, control the receiver to receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain; or
the processor is configured to: before determining, according to the information query request, the service information corresponding to the service policy, control the receiver to receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, where
the service information corresponding to the uplink data flow includes at least one of charging information corresponding to the uplink data flow or network resource usage information corresponding to the uplink data flow; the service information corresponding to the downlink data flow includes at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

With reference to the fourth aspect, the first possible implementation of the fourth aspect, or the second possible implementation of the fourth aspect, in a third possible implementation of the fourth aspect, the information query request includes a service policy identifier corresponding to the service policy;
the processor is configured to: before determining, according to the information query request, the service information corresponding to the service policy, control the receiver to receive a correspondence between a network policy identifier of the at least one network policy and the service policy identifier that is of the service policy and that is sent by the PCRF entity; and
the processor is configured to determine the network policy identifier of the at least one network policy according to the service policy identifier that is of the service policy and that is included in the information query request and the correspondence between the service policy identifier of the service policy and the network policy identifier of the at least one network policy, and obtain, according to the network policy identifier of the at least one network policy, the service information corresponding to the service policy.

With reference to the fourth aspect, the first possible implementation of the fourth aspect, or the second possible implementation of the fourth aspect, in a fourth possible implementation of the fourth aspect, the information query request includes a network policy identifier of the at least one network policy, and
the processor is configured to obtain, according to the network policy identifier of the at least one network policy, the service information corresponding to the service policy.

According to a fifth aspect, a service policy management method is provided, and the method includes:
receiving, by a policy and charging rules function entity, a service request sent by an application server;
generating, by the policy and charging rules function entity, a service policy according to the service request, where the service policy includes at least one network policy, and the at least one network policy includes a Policy and Charging Control PCC policy and a service chain policy; and
generating, by the policy and charging rules function entity, a network rule according to the service policy, and sending the network rule to a corresponding network rule enforcement device, where the network rule is a PCC rule or a service chain control rule, or includes both a PCC rule and a service chain control rule.

In a first possible implementation of the fifth aspect, the generating, by the policy and charging rules function entity, a network rule according to the service policy, and sending the network rule to a corresponding network rule enforcement device includes:
generating, by the policy and charging rules function entity, the PCC rule according to the PCC policy, and sending the PCC rule to a policy and charging enforcement function entity.

With reference to the fifth aspect or the first possible implementation of the fifth aspect, in a second possible implementation of the fifth aspect, the generating, by the policy and charging rules function entity, a network rule according to the service policy, and sending the network rule to a corresponding network rule enforcement device includes:
generating, by the policy and charging rules function entity, a service chain control rule according to the service chain policy, and sending the service chain control rule to a flow classifier.

With reference to the fifth aspect, the first possible implementation of the fifth aspect, or the second possible implementation of the fifth aspect, in a third possible implementation of the fifth aspect, the PCC rule includes a network policy identifier of the PCC policy, and the service chain control rule includes a network policy identifier of the service chain policy.

With reference to any one of the fifth aspect, or the first to the third possible implementations of the fifth aspect, in a fourth possible implementation of the fifth aspect, the method further includes:
generating, by the policy and charging rules function entity, a service chain path corresponding to the service request, and sending the service chain path to a Gi local area network control device.

With reference to any one of the fifth aspect, or the first to the fourth possible implementations of the fifth aspect, in a fifth possible implementation of the fifth aspect, the method further includes:
receiving, by the policy and charging rules function entity, a service information query request sent by the application server, where the service information query request is used to request to query service information corresponding to the service policy;
sending, by the policy and charging rules function entity, an information query request to a service charging function entity, where the information query request is used to request to query service information corresponding to the service policy;
receiving, by the policy and charging rules function entity, the service information that is corresponding to the service policy and that is returned by the service charging function entity according to the information query request; and
sending, by the policy and charging rules function entity to the application server, the service information corresponding to the service policy, where
the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy.

With reference to the fifth possible implementation of the fifth aspect, in a sixth possible implementation of the fifth aspect, before the receiving, by the policy and charging rules function entity, a service information query request sent by the application server, the method further includes:
sending, by the policy and charging rules function entity, a correspondence between the service policy identifier of the service policy and a network policy identifier of the at least one network policy to the service charging function entity; and
the sending, by the policy and charging rules function entity, an information query request to a service charging function entity includes:
   sending, by the policy and charging rules function entity to the service charging function entity, an information query request that includes the service policy identifier, so that the service charging function entity determines, according to the service policy identifier, the service information corresponding to the service policy.

With reference to the fifth possible implementation of the fifth aspect, in a seventh possible implementation of the fifth aspect, the sending, by the policy and charging rules function entity, an information query request to a service charging function entity according to the service information query request includes:
sending, by the policy and charging rules function entity to the service charging function entity, an information query request that includes a network policy identifier of the at least one network policy, so that the service charging function entity determines, according to the network policy identifier of the at least one network policy, the service information corresponding to the service policy, where
the network policy identifier of the at least one network policy includes the network policy identifier of the PCC policy and the network policy identifier of the service chain policy.

According to a sixth aspect, a service policy management method is provided, and the method includes:
receiving, by the service charging function entity, an information query request sent by a policy and charging rules function entity, where the information query request is used to request to query service information corresponding to a service policy, the service policy includes at least one network policy, and the at least one network policy includes a Policy and Charging Control PCC policy and a service chain policy;
determining, by the service charging function entity according to the information query request, the service information corresponding to the service policy, where the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy; and
returning, by the service charging function entity to the policy and charging rules function entity, the service information corresponding to the service policy.

In a first possible implementation of the sixth aspect, before the determining, by the service charging function entity according to the information query request, the service information corresponding to the service policy, the method further includes:
receiving, by the service charging function entity, service information that is corresponding to the PCC policy and that is sent by a policy and charging enforcement function entity, where the service information corresponding to the PCC policy includes at least one of the charging information corresponding to the PCC policy or the network resource usage information corresponding to the PCC policy.

With reference to the sixth aspect or the first possible implementation of the sixth aspect, in a second possible implementation of the sixth aspect, before the determining, by the service charging function entity according to the information query request, the service information corresponding to the service policy, the method further includes:
receiving, by the service charging function entity, service information that is corresponding to an uplink data flow of a service chain corresponding to the service chain policy and that is sent by the last service switch node in the service chain, and receiving service information that is corresponding to a downlink data flow of the service chain and that is sent by a flow classifier in the service chain; or
receiving, by the service charging function entity, service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, where
the service information corresponding to the uplink data flow includes at least one of charging information corresponding to the uplink data flow or network resource usage information corresponding to the uplink data flow; the service information corresponding to the downlink data flow includes at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

With reference to the sixth aspect, the first possible implementation of the sixth aspect, or the second possible implementation of the sixth aspect, in a third possible implementation of the sixth aspect, the information query request includes a service policy identifier corresponding to the service policy, and before the determining, by the service charging function entity according to the information query request, the service information corresponding to the service policy, the method further includes:
receiving, by the service charging function entity, a correspondence between a network policy identifier of the at least one network policy and the service policy identifier that is of the service policy and that is sent by the PCRF entity; and
the determining, by the service charging function entity according to the information query request, the service information corresponding to the service policy includes:
   determining, by the service charging function entity, the network policy identifier of the at least one network policy according to the service policy identifier that is of the service policy and that is included in the information query request and the correspondence between the service policy identifier of the service policy and the network policy identifier of the at least one network policy; and
   obtaining, according to the network policy identifier of the at least one network policy, the service information corresponding to the service policy.
With reference to the sixth aspect, the first possible implementation of the sixth aspect, or the second possible implementation of the sixth aspect, in a fourth possible implementation of the sixth aspect, the information query request includes a network policy identifier of the at least one network policy, and
the determining, by the service charging function entity according to the information query request, the service information corresponding to the service policy includes:
   obtaining, by the service charging function entity according to the network policy identifier of the at least one network policy, the service information corresponding to the service policy.

According to a seventh aspect, a service policy management system is provided, and the system includes:
the policy and charging rules function entity according to the first aspect or any possible implementation of the first aspect, and the service charging function entity according to the third aspect or any possible implementation of the third aspect; or
the policy and charging rules function entity according to the second aspect or any possible implementation of the second aspect, and the service charging function entity according to the fourth aspect or any possible implementation of the fourth aspect.

The technical solution provided in the embodiments of the present invention brings the following beneficial effects:
After a service request sent by an application server is received, a service policy including a Policy and Charging Control PCC policy is generated according to the service request. A PCC rule and a service chain control rule are further correspondingly generated, and sent to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 shows an architectural diagram of a network element in a network environment related to a service policy management method according to some embodiments of the present invention;
FIG. 2 shows a method flowchart of a service policy management method according to an embodiment of the present invention;
FIG. 3 shows a method flowchart of a service policy management method according to an embodiment of the present invention;
FIG. 4A and FIG. 4B show a method flowchart of a service policy management method according to an embodiment of the present invention;
FIG. 5 shows a structural diagram of a PCRF entity according to an embodiment of the present invention;
FIG. 6 shows a structural diagram of a service charging function entity according to an embodiment of the present invention; and
FIG. 7 shows a block diagram of a network entity according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

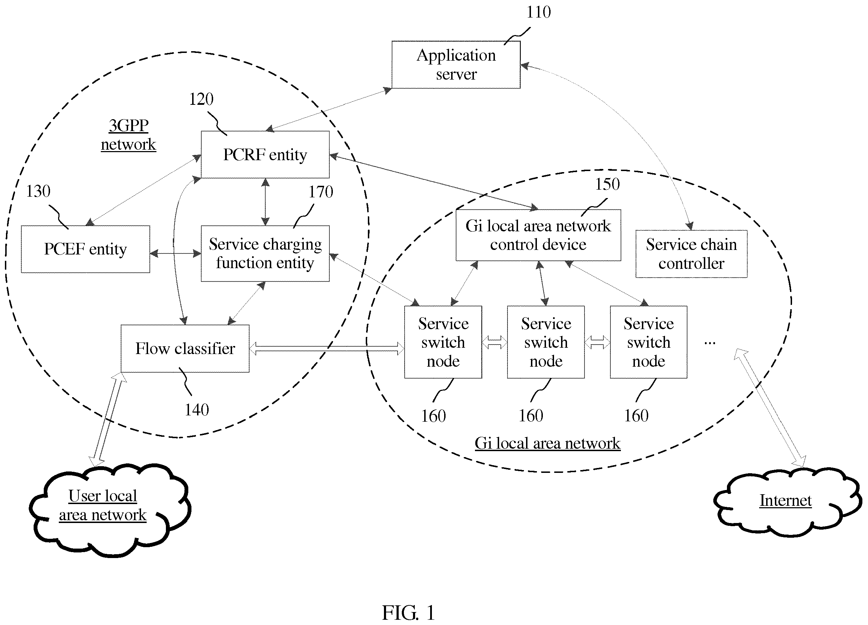

Referring to FIG. 1, FIG. 1 shows an architectural diagram of a network element in a network environment related to a service policy management method according to some embodiments of the present invention. The network environment includes at least the following network entities: an application server 110, a PCRF entity 120, a PCEF entity 130, a flow classifier (flow classifier) 140, a Gi local area network control device (Gi-LAN controller) 150, several service switch nodes (switch) 160, and a service charging function entity 170. The application server 110 is an enterprise server of an Internet service provider. The application server 110 is configured to: request a network service from the Internet, and provide, based on the requested network service, service data of a specific application for a user. The PCRF entity 120 is a PCC policy decision point of a service data flow and an IP bearer resource. The PCRF entity 120 is configured to: select an available PCC rule, and provide the available PCC rule for the PCEF entity 130, so that the PCEF entity 130 implements a service data flow detection function, a policy enforcement function, and a flow-based charging function. The flow classifier 140 and various service switch nodes 160 are located between a user local area network and the Internet. The flow classifier 140 is configured to: identify and classify a service flow, and mark a data packet, so that the service switch nodes 160 identify a service to which the data packet belongs. The Gi local area network control device 150 is configured to coordinate the various service switch nodes 160 to forward service flow data. Specifically, the Gi local area network control device 150 may coordinate the various service switch nodes 160, so that the various service switch nodes 160 control the service flow data to sequentially accept different value-added services. The service charging function entity 170 may obtain service information collected by the PCEF entity 130, for example, charging data; and provide, for the application server, a function of querying service information of the PCC rule.

In the prior art, a PCC rule is generated and managed by a PCRF entity in a 3GPP network, and a service chain control rule is generated and managed by a service chain controller in a Gi local area network. When requesting a network service, an application server needs to separately initiate requests to two different networks. Therefore, PCC policy control information and service chain policy control information need to be separately transmitted between an application server and a network side, and signaling resources are excessively occupied. In addition, value-added services corresponding to the service chain policy are mostly paid services. In the prior art, the service charging function entity 170 can provide, only for a server, a service information query service related to the PCC policy, and is deficient in a function of querying service information related to the service chain policy.

In the solution shown in the present invention, the PCRF entity 120 is improved, so that the PCRF may manage a service chain control rule on a Gi local area network side in the prior art. Therefore, when requesting a network service, the application server 110 may initiate a service request to the PCRF entity 120. The PCRF entity 120 uniformly generates a PCC policy and a service chain policy, further generates a PCC rule and a service chain control rule, and deliver the PCC rule and the service chain control rule to a corresponding enforcement entity. The application server needs to perform signaling interaction with only the PCRF entity 120 on the 3GPP network side, so as to save signaling resources and optimize network deployment. In addition, in the solution shown in the present invention, the flow classifier 140 and the service switch nodes 160 may further send, to the service charging function entity 170, the service information corresponding to the service chain policy, and the service charging function entity 170 provides a query service of the service information corresponding to the service chain policy, so as to extend system functions.

One or more service enabling units are deployed in a Gi local area network between an operator gateway and an external network. Each service enabling unit may provide one or more value-added services for a service flow data passing the service enabling unit, for example, content filtering, a cache service, a firewall, or a wide area application acceleration. A service chain (service chain) of a service is all service enabling units that service flow data of the service passes and a sequence in which the service flow data passes all the service enabling units.

In the present invention, the PCC policy and the PCC rule include a charging group and a quality of service (English full name: quality of service, QoS for short) parameter, for example, a service level identifier and bandwidth information, so that the PCEF entity performs QoS management and charging on a corresponding service. The service chain policy and the service chain control rule include a service chain identifier (service chain ID), an identifier of a service enabling unit that a service flow passes, a sequence of all service enabling units that the service flow passes, and the like. The flow classifier may identify, according to the service chain control rule, service flow data corresponding to the service chain policy.

In addition, generation of the PCC rule and generation of the service chain control rule are separately described in this embodiment of the present invention. In an actual practice, when the PCRF entity generates the PCC rule and the service chain control rule, information about the service chain control rule may be included in the PCC rule. That is, in addition to information about the PCC rule, the PCC rule may further include the information about the service chain control rule. In this case, the PCC rule may implement both the PCC policy and the service chain policy. When delivering rules, the PCRF separately sends the PCC rule and the service chain control rule to corresponding enforcement entities. Similarly, the information about the generated PCC rule may be included in the service chain control rule. That is, the service chain control rule may implement both the PCC policy and the service chain policy.

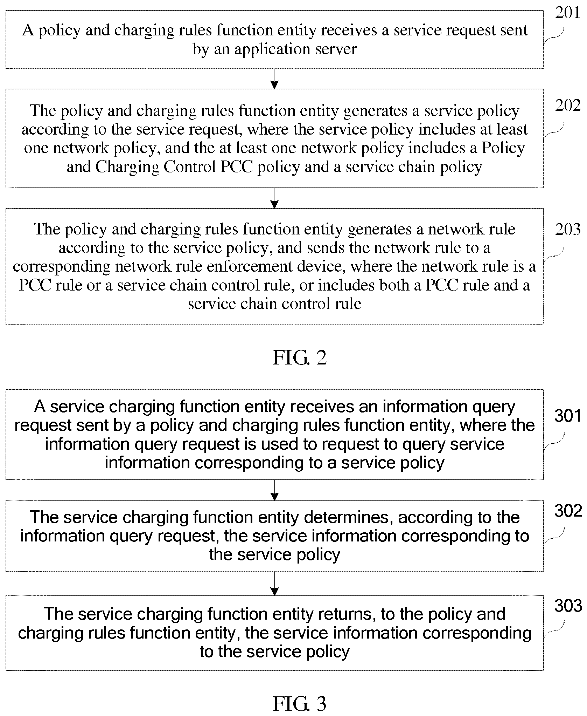

Referring to FIG. 2, FIG. 2 shows a method flowchart of a service policy management method according to an embodiment of the present invention. The service policy management method may be performed by the PCRF entity 120 in the network environment shown in FIG. 1. As shown in FIG. 2, the service policy management method may include the following steps.

Step 201: A policy and charging rules function entity receives a service request sent by an application server.

Step 202: The policy and charging rules function entity generates a service policy according to the service request, where the service policy includes at least one network policy, and the at least one network policy includes a Policy and Charging Control PCC policy and a service chain policy.

Step 203: The policy and charging rules function entity generates a network rule according to the service policy, and sends the network rule to a corresponding network rule enforcement device, where the network rule is a PCC rule or a service chain control rule, or includes both a PCC rule and a service chain control rule.

In conclusion, according to the service policy management method shown in this embodiment of the present invention, after receiving a service request sent by an application server, a PCRF generates, according to the service request, a service policy that includes a policy and charging control PCC policy; further correspondingly generates a PCC rule and a service chain control rule; and sends the PCC rule and the service chain control rule to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

Referring to FIG. 3, FIG. 3 shows a method flowchart of a service policy management method according to an embodiment of the present invention. The service policy management method may be executed by a service charging function entity 170 in the network environment shown in FIG. 1. As shown in FIG. 3, the service policy management method may include the following steps.

Step 301: A service charging function entity receives an information query request sent by a policy and charging rules function entity, where the information query request is used to request to query service information corresponding to a service policy.

The service policy includes at least one network policy. The at least one network policy includes a Policy and Charging Control PCC policy and a service chain policy.

Optionally, the service policy is a service policy that is generated by the PCRF entity according to the service request when the PCRF entity receives a service request sent by the application server.

Step 302: The service charging function entity determines, according to the information query request, the service information corresponding to the service policy.

The service information corresponding to the service policy includes at least one of charging information corresponding to the at least one network policy or network resource usage information corresponding to the at least one network policy. The charging information corresponding to the at least one network policy includes charging information corresponding to the PCC policy and charging information corresponding to the service chain policy. The network resource usage information corresponding to the at least one network policy includes network resource usage information corresponding to the PCC policy and network resource usage information corresponding to the service chain policy.

Step 303: The service charging function entity returns, to the policy and charging rules function entity, the service information corresponding to the service policy.

In conclusion, according to the service policy management method shown in this embodiment of the present invention, when receiving an information query request sent by a PCRF entity, a service charging function entity determines, according to the request, service information that includes: charging information corresponding to a PCC policy, charging information corresponding to a service chain policy, network resource usage information corresponding to the PCC policy, and network resource usage information corresponding to the service chain policy. Both a service information query related to the PCC policy and a service information query related to the service chain policy can be provided, so as to extend system functions.

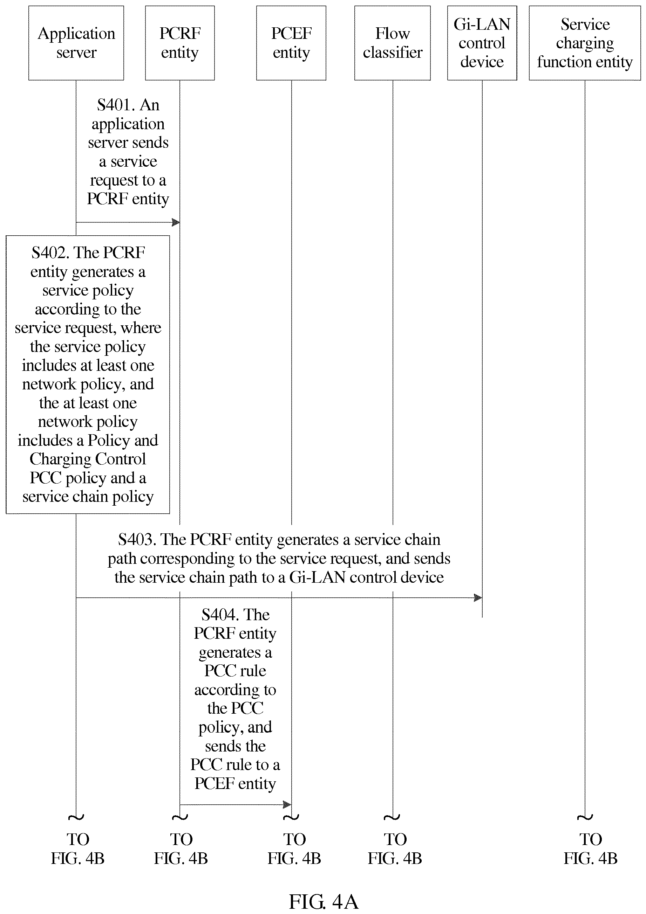

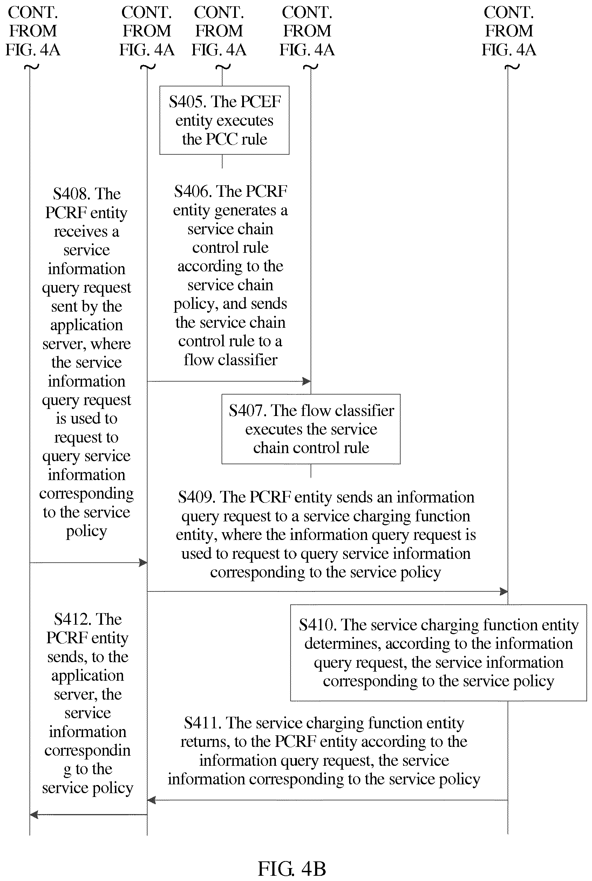

For details of specific implementations of methods shown in FIG. 2 and FIG. 3 and interaction between the PCRF and another network element, refer to FIG. 4A and FIG. 4B.

As shown in FIG. 4A and FIG. 4B, FIG. 4A and FIG. 4B show a method flowchart of a service policy management method according to an embodiment of the present invention. The service policy management method may be executed by various network entities in the network environment shown in FIG. 1 that include the PCRF entity 120 and the service charging function entity 170. As shown in FIG. 4A and FIG. 4B, the service policy management method may include the following steps.

Step 401: An application server sends a service request to a PCRF entity.

An application server on an enterprise side needs to initiate a service data flow for user equipment or a group of user equipments served by the application server, and before initiating the data flow, may send a service request to a PCRF entity on an operator network side by using an open platform. The service request may include information such as an application identifier corresponding to the data flow, a user IP (internet protocol, internet protocol) address, a user identifier (or may be a group user identifier), a requested QoS parameter, a requested media type, and a requested service chain service.

The requested service chain service indicates specific additional services needed by the data flow, for example, a video acceleration service, a data flow compression service, and a security service.

Step 402: The PCRF entity generates a service policy according to the service request, where the service policy includes at least one network policy, and the at least one network policy includes a Policy and Charging Control PCC policy and a service chain policy.

Optionally, the at least one network policy may include only a PCC policy instead of a service chain policy.

The PCRF entity generates a service policy according to content of a service request provided by the application server. The service policy includes a service policy identifier and one or more network policies. These network policies include network policy identifiers of the network policies and corresponding application identifiers. A PCC policy in the network policies needs to further include requirement information (such as a requested QoS parameter and a requested media type) related to the PCC policy. If the network policy is a service chain policy, the network policy needs to include a service chain identifier. If the request message initiated by the application server does not include a service chain request message, the service policy includes only one PCC policy. If the request message includes related PCC information and service chain request information, the service policy includes one PCC policy and one or more service chain policies.

Step 403: The PCRF entity generates a service chain path corresponding to the service request, and sends the service chain path to a Gi-LAN control device.

If the request message includes the service chain request information, a Gi local area network (English full name: Gi-local area network, Gi-LAN for short) control device further needs to control service forwarding nodes in a service chain corresponding to the service chain policy to forward a data flow corresponding to the service chain policy. In this case, the PCRF entity further needs to generate a service chain path and sends the service chain path to a Gi-LAN control device in the Gi-LAN. The Gi-LAN control device controls the service forwarding nodes in the service chain path to forward data.

Step 404: The PCRF entity generates a PCC rule according to the PCC policy, and sends the PCC rule to a PCEF entity.

Optionally, the PCC rule includes a network policy identifier of the PCC policy.

After receiving the service policy, the PCRF entity obtains, by parsing the service policy, one or more network policies including the PCC policy, generates a corresponding PCC rule according to PCC-related requirement information (such as a requested QoS parameter and a requested media type) in the PCC policy, and delivers the PCC rule to the PCEF entity.

Step 405: The PCEF entity executes the PCC rule.

Step 406: The PCRF entity generates a service chain control rule according to the service chain policy, and sends the service chain control rule to a flow classifier.

Optionally, the service chain control rule includes a network policy identifier of the service chain policy.

If the service policy includes a service chain policy, the PCRF obtains, by parsing a corresponding network policy, a service chain identifier, and sends a service chain control rule that carries the service chain identifier to the flow classifier, so that the flow classifier can implement a subsequent service flow detection function.

Step 407: The flow classifier executes the service chain control rule.

Step 408: The PCRF entity receives a service information query request sent by the application server, where the service information query request is used to request to query service information corresponding to the service policy.

Optionally, the service information corresponding to the service policy includes at least one of charging information corresponding to the at least one network policy or network resource usage information corresponding to the at least one network policy. The charging information corresponding to the at least one network policy includes charging information corresponding to the PCC policy and charging information corresponding to the service chain policy. The network resource usage information corresponding to the at least one network policy includes network resource usage information corresponding to the PCC policy and network resource usage information corresponding to the service chain policy.

Based on a decision of an application server of an enterprise, the application server may actively initiate a service information query request of a service to the PCRF entity by using a capability open platform, to query service information corresponding to a service policy of the service. The request may carry a service policy identifier of the service policy. Service information may include charging information and network resource usage information. The network resource usage information includes a traffic resource or a time resource corresponding to a PCC policy, or may include a use status of a service flow corresponding to a service chain policy in a service chain. The use status may be specifically a quantity of access times, processed traffic, or the like.

Step 409: The PCRF entity sends an information query request to a service charging function entity, where the information query request is used to request to query service information corresponding to the service policy.

After receiving the service information query request, the PCRF entity initiates, to a service charging function unit, an information query request for querying the service information.

Optionally, the information query request may carry a service policy identifier of the service policy, or the information query request may carry a network policy identifier of at least one network policy included in the service policy.

Step 410: The service charging function entity determines, according to the information query request, the service information corresponding to the service policy.

Optionally, before determining, according to the information query request, the service information corresponding to the service policy, the service charging function entity may receive service information that is corresponding to the PCC policy and that is sent by a policy and charging enforcement function entity. The service information corresponding to the PCC policy includes at least one of charging information corresponding to the PCC policy or network resource usage information corresponding to the PCC policy.

The PCEF entity may collect statistics for the charging information and the network resource usage information corresponding to the PCC policy. After collecting the statistics for the charging information and the network resource usage information corresponding to the PCC policy, the PCEF entity may send, to the service charging function entity, the charging information and the network resource usage information corresponding to the PCC policy, and the network policy identifier of the PCC policy.

Optionally, before determining, according to the information query request, the service information corresponding to the service policy, the service charging function entity may receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain. Alternatively, before determining, according to the information query request, the service information corresponding to the service policy, the service charging function entity may receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain. The service information corresponding to the uplink data flow includes at least one of charging information corresponding to the uplink data flow or network resource usage information corresponding to the uplink data flow. The service information corresponding to the downlink data flow includes at least one of charging information corresponding to the downlink data flow or network resource usage information corresponding to the downlink data flow. The service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

Statistics for the charging information and the network resource usage information corresponding to the service chain policy may be collected by using the flow classifier or the service switch node. After passing the flow classifier, the uplink data flow of the service chain corresponding to the service chain policy enters the Gi-LAN, and will not pass the flow classifier again. Therefore, statistics for charging information and network resource usage information of the uplink data flow can only be collected by using the last service switch node that the data flow passes. The downlink data flow first passes the flow classifier, then enters the Gi-LAN, and again flows to the flow classifier. Therefore, statistics for charging information and network resource usage information of the downlink data flow may be collected by using the flow classifier or by using the last service switch node that the data flow passes.

After statistics for charging information and network resource usage information corresponding to a service chain policy are collected by the flow classifier or the service switch node, the flow classifier or the service switch node sends, to a service charging function unit, the charging information and the network resource usage information corresponding to the service chain policy. The message further carries a network policy identifier of the service chain policy. The flow classifier may pre-send the network policy identifier of the service chain policy to the last service switch node that a data flow corresponding to the service chain policy passes. Alternatively, the flow classifier may add the network policy identifier of the service chain policy into a data flow corresponding to the service chain policy, and the last service switch node that the data flow corresponding to the service chain policy passes obtains the network policy identifier from the data flow.

Optionally, when sending an information query request to the service charging function entity according to the service information query request, the policy and charging rules function entity may send, to the service charging function entity, an information query request that includes a network policy identifier of the at least one network policy, so that the service charging function entity determines, according to the network policy identifier of the at least one network policy, service information corresponding to the service policy. The network policy identifier of the at least one network policy includes the network policy identifier of the PCC policy and the network policy identifier of the service chain policy.

When the service charging function entity receives service information sent by the PCEF, the flow classifier, and the service switch node, the service charging function entity also receives a network policy identifier of a corresponding PCC policy or a network policy identifier of a corresponding service chain policy. In this case, in the service charging function entity, each piece of service information of a service policy is corresponding to a network policy identifier of each network policy that is included in the service policy. When querying service information corresponding to the service policy, the PCRF entity may directly send, to the service charging function entity, the network policy identifier of each network policy that is included in the service policy, and the service charging function entity directly queries service information corresponding to each network policy identifier.

Optionally, before receiving the service information query request sent by the application server, the policy and charging rules function entity may further send a correspondence between the service policy identifier of the service policy and the network policy identifier of the at least one network policy to the service charging function entity. When sending an information query request to the service charging function entity, the policy and charging rules function entity may send, to the service charging function entity, an information query request that includes the service policy identifier, so that the service charging function entity determines, according to the service policy identifier, the service information corresponding to the service policy. When determining, according to the information query request, the service information corresponding to the service policy, the service charging function entity may determine the network policy identifier of the at least one network policy according to the correspondence between the service policy identifier of the service policy and the network policy identifier of the at least one network policy and the service policy identifier that is of the service policy and that is included in the information query request, and obtains, according to the network policy identifier of the at least one network policy, the service information corresponding to the service policy.

Alternatively, the service charging function entity may further obtain, from the PCRF, a correspondence between the service policy identifier and each network policy identifier in advance. When sending an information query request, the PCRF may send only the service policy identifier. The service charging function entity queries, according to the correspondence obtained in advance, each corresponding network policy identifier, and queries, according to the queried network policy identifier, the service information corresponding to the service policy.

Step 411: The service charging function entity returns, to the PCRF entity according to the information query request, the service information corresponding to the service policy.

Step: 412, The PCRF entity sends, to the application server, the service information corresponding to the service policy.

In conclusion, according to the service policy management method shown in this embodiment of the present invention, after receiving a service request sent by an application server, a PCRF generates, according to the service request, a service policy that includes a policy and charging control PCC policy; further correspondingly generates a PCC rule and a service chain control rule; and sends the PCC rule and the service chain control rule to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

In addition, according to the service policy management method shown in this embodiment of the present invention, a service charging function entity obtains service information from a PCEF, a flow classifier, and a service switch node. When receiving an information query request sent by a PCRF entity, the service charging function entity determines, according to the request, service information that includes: charging information corresponding to a PCC policy, charging information corresponding to a service chain policy, network resource usage information corresponding to the PCC policy, and network resource usage information corresponding to the service chain policy. A service information query related to the PCC policy can be provided; statistics for service information related to the service chain policy can be collected; a query service can be provided, so as to extend system functions.

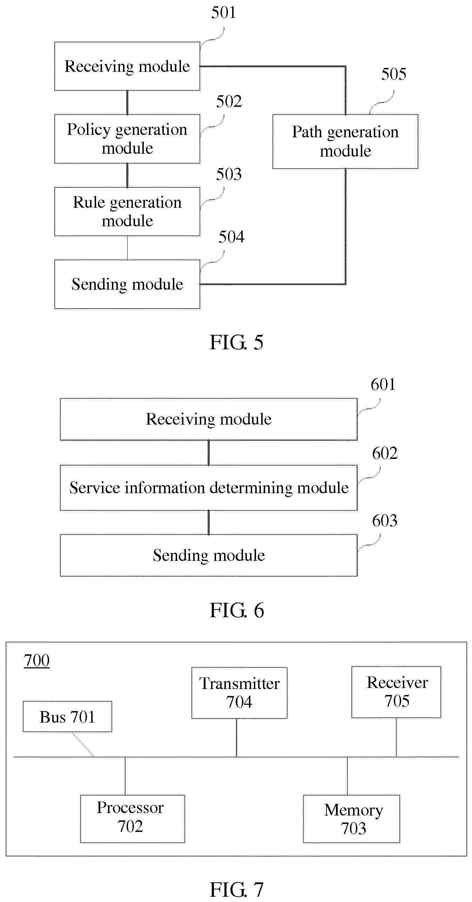

Referring to FIG. 5, FIG. 5 shows a structural diagram of a policy and charging rules function entity according to an embodiment of the present invention. The policy and charging rules function entity may be the PCRF entity 120 in the network environment shown in FIG. 1. The policy and charging rules function entity may perform all steps in the method shown in FIG. 2 or execute some steps in the method shown in FIG. 4A and FIG. 4B. As shown in FIG. 5, the policy and charging rules function entity may include:
a receiving module 501, configured to receive a service request sent by an application server;
a policy generation module 502, configured to generate a service policy according to the service request, where the service policy includes at least one network policy, and the at least one network policy includes a Policy and Charging Control PCC policy and a service chain policy;
a rule generation module 503, configured to generate a network rule according to the service policy; and
a sending module 504, configured to send the network rule to a corresponding network rule enforcement device, where the network rule is a PCC rule or a service chain control rule, or includes both a PCC rule and a service chain control rule.

Optionally, the rule generation module 503 is configured to generate the PCC rule according to the PCC policy.

The sending module 504 is configured to send the PCC rule to a policy and charging enforcement function entity.

Optionally, the rule generation module 503 is configured to generate the service chain control rule according to the service chain policy.

The sending module 504 is configured to send the service chain control rule to a flow classifier.

Optionally, the PCC rule includes a network policy identifier of the PCC policy, and the service chain control rule includes a network policy identifier of the service chain policy.

Optionally, the policy and charging rules function entity further includes:
a path generation module 505, configured to generate a service chain path corresponding to the service request.

The sending module 504 is configured to send the service chain path to a Gi local area network control device.

Optionally, the receiving module 501 is configured to receive a service information query request sent by the application server. The service information query request is used to request to query service information corresponding to the service policy.

The sending module 504 is configured to send an information query request to a service charging function entity. The information query request is used to request to query service information corresponding to the service policy.

The receiving module 501 is configured to receive the service information that is corresponding to the service policy and that is returned by the service charging function entity according to the information query request.

The sending module 504 is configured to send, to the application server, the service information corresponding to the service policy.

The service information corresponding to the service policy includes at least one of charging information corresponding to the at least one network policy or network resource usage information corresponding to the at least one network policy. The charging information corresponding to the at least one network policy includes charging information corresponding to the PCC policy and charging information corresponding to the service chain policy. The network resource usage information corresponding to the at least one network policy includes network resource usage information corresponding to the PCC policy and network resource usage information corresponding to the service chain policy.

Optionally, the sending module 504 is configured to send a correspondence between a service policy identifier of the service policy and a network policy identifier of the at least one network policy to the service charging function entity before the receiving module 501 receives the service information query request sent by the application server.

The sending module 504 is configured to send, to the service charging function entity, an information query request that includes the service policy identifier, so that the service charging function entity determines, according to the service policy identifier, the service information corresponding to the service policy.

Optionally, the sending module 504 is configured to send, to the service charging function entity, an information query request that includes a network policy identifier of the at least one network policy, so that the service charging function entity determines, according to the network policy identifier of the at least one network policy, the service information corresponding to the service policy.

The network policy identifier of the at least one network policy includes the network policy identifier of the PCC policy and the network policy identifier of the service chain policy.

In conclusion, the policy and charging rules function entity shown in this embodiment of the present invention receives a service request sent by an application server, generates a service policy that includes a policy and charging control PCC policy according to the service request; further correspondingly generates a PCC rule and a service chain control rule; and sends the PCC rule and the service control rule to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

Referring to FIG. 6, FIG. 6 shows a structural diagram of a service charging function entity according to an embodiment of the present invention. The service charging function entity may be the service charging function entity 170 in the network environment shown in FIG. 1. The service charging function entity may execute all steps in the method shown in FIG. 3 and some steps in the method shown in FIG. 4A and FIG. 4B. As shown in FIG. 6, the service charging function entity may include:
a receiving module 601, configured to receive an information query request sent by a policy and charging rules function entity, where the information query request is used to request to query service information corresponding to a service policy, the service policy includes at least one network policy, and the at least one network policy includes a Policy and Charging Control PCC policy and a service chain policy;
a service information determining module 602, configured to determine, according to the information query request, the service information corresponding to the service policy, where the service information corresponding to the service policy includes at least one of charging information corresponding to the at least one network policy or network resource usage information corresponding to the at least one network policy, the charging information corresponding to the at least one network policy includes charging information corresponding to the PCC policy and charging information corresponding to the service chain policy, and the network resource usage information corresponding to the at least one network policy includes network resource usage information corresponding to the PCC policy and network resource usage information corresponding to the service chain policy; and
a sending module 603, configured to return, to the policy and charging rules function entity, the service information corresponding to the service policy.

Optionally, the receiving module 601 is configured to: before the service information determining module determines, according to the information query request, the service information corresponding to the service policy, receive service information that is corresponding to the PCC policy and that is sent by a policy and charging enforcement function entity, where the service information corresponding to the PCC policy includes at least one of the charging information corresponding to the PCC policy or the network resource usage information corresponding to the PCC policy.

Optionally, the receiving module 601 is configured to: before the service information determining module 602 determines, according to the information query request, the service information corresponding to the service policy, receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain.

Alternatively, the receiving module 601 is configured to: before the service information determining module 602 determines, according to the information query request, the service information corresponding to the service policy, receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain.

The service information corresponding to the uplink data flow includes at least one of charging information corresponding to the uplink data flow or network resource usage information corresponding to the uplink data flow. The service information corresponding to the downlink data flow includes at least one of charging information corresponding to the downlink data flow or network resource usage information corresponding to the downlink data flow. The service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

Optionally, the information query request includes a service policy identifier corresponding to the service policy. The receiving module 601 is configured to: before the service information determining module 602 determines, according to the information query request, the service information corresponding to the service policy, receive a correspondence between a network policy identifier of the at least one network policy and the service policy identifier that is of the service policy and that is sent by the PCRF entity.

The service information determining module 602 is configured to determine the network policy identifier of the at least one network policy according to the service policy identifier that is of the service policy and that is included in the information query request and the correspondence between the service policy identifier of the service policy and the network policy identifier of the at least one network policy, and obtain, according to the network policy identifier of the at least one network policy, the service information corresponding to the service policy.

Optionally, the information query request includes a network policy identifier of the at least one network policy. The service information determining module 602 is configured to obtain, according to the network policy identifier of the at least one network policy, the service information corresponding to the service policy.

In conclusion, the service charging function entity shown in this embodiment of the present invention obtains service information from a PCEF, a flow classifier, and a service switch node. When receiving an information query request sent by a PCRF entity, the service charging function entity determines, according to the request, service information that includes: charging information corresponding to a PCC policy, charging information corresponding to a service chain policy, network resource usage information corresponding to the PCC policy, and network resource usage information corresponding to the service chain policy. A service information query related to the PCC policy can be provided; statistics for service information related to the service chain policy can be collected; a query service can be provided, so as to extend system functions.

In various modules shown in FIG. 5 and FIG. 6, steps performed by a receiving module may be completed by a receiver under the control of a processor, steps performed by a sending module may be completed by a transmitter under the control of the processor, and steps performed by other modules may be independently completed by the processor. Further, referring to FIG. 7, FIG. 7 shows a block diagram of a network entity according to an embodiment of the present invention. The network entity 700 may be a PCRF entity or a service charging function entity in the network environment shown in FIG. 1. The network entity may include: a bus 701; and a processor 702, a memory 703, a transmitter 704, and a receiver 705 that are connected to the bus. The memory 703 is configured to store one or more instructions. The one or more instructions are executed by the processor 702.

When the network entity 700 is implemented as the PCRF entity 120 in the network environment shown in FIG. 1, the processor 702 is configured to control the receiver 705 to receive a service request sent by an application server.

The processor 702 is configured to generate a service policy according to the service request. The service policy includes at least one network policy. The at least one network policy includes a Policy and Charging Control PCC policy and a service chain policy.

The processor 702 is configured to generate a network rule according to the service policy.

The processor 702 is configured to control the transmitter 704 to send the network rule to a corresponding network rule enforcement device. The network rule is a PCC rule or a service chain control rule, or includes both a PCC rule and a service chain control rule.

Optionally, the processor 702 is configured to generate the PCC rule according to the PCC policy.

The processor 702 is configured to control the transmitter 704 to send the PCC rule to a policy and charging enforcement function entity.

Optionally, the processor 702 is configured to generate the service chain control rule according to the service chain policy.

The processor 702 is configured to control the transmitter 704 to send the service chain control rule to a flow classifier.

Optionally, the PCC rule includes a network policy identifier of the PCC policy, and the service chain control rule includes a network policy identifier of the service chain policy.

Optionally, the processor 702 is further configured to generate a service chain path corresponding to the service request.

The processor 702 is configured to control the transmitter 704 to send the service chain path to a Gi local area network control device.

Optionally, the processor 702 is configured to control the receiver 705 to receive a service information query request sent by the application server. The service information query request is used to request to query service information corresponding to the service policy.

The processor 702 is configured to control the transmitter 704 to send an information query request to a service charging function entity. The information query request is used to request to query service information corresponding to the service policy.

The processor 702 is configured to control the receiver 705 to receive the service information that is corresponding to the service policy and that is returned by the service charging function entity according to the information query request.

The processor 702 is configured to control the transmitter 704 to send, to the application server, the service information corresponding to the service policy.

The service information corresponding to the service policy includes at least one of charging information corresponding to the at least one network policy or network resource usage information corresponding to the at least one network policy. The charging information corresponding to the at least one network policy includes charging information corresponding to the PCC policy and charging information corresponding to the service chain policy. The network resource usage information corresponding to the at least one network policy includes network resource usage information corresponding to the PCC policy and network resource usage information corresponding to the service chain policy.

Optionally, the processor 702 is configured to: before controlling the receiver 705 to receive the service information query request sent by the application server, control the transmitter 704 to send a correspondence between a service policy identifier of the service policy and a network policy identifier of the at least one network policy to the service charging function entity.

The processor 702 is configured to control the transmitter 704 to send, to the service charging function entity, an information query request that includes the service policy identifier, so that the service charging function entity determines, according to the service policy identifier, the service information corresponding to the service policy.

Optionally, the processor 702 is configured to control the transmitter 704 to send, to the service charging function entity, an information query request that includes a network policy identifier of the at least one network policy, so that the service charging function entity determines, according to the network policy identifier of the at least one network policy, the service information corresponding to the service policy.

The network policy identifier of the at least one network policy includes the network policy identifier of the PCC policy and the network policy identifier of the service chain policy.

In conclusion, when the network entity shown in this embodiment of the present invention is implemented as a PCRF entity, after receiving a service request sent by an application server, the PCRF entity generates, according to the service request, a service policy that includes a policy and charging control PCC policy; further correspondingly generates a PCC rule and a service chain control rule; and sends the PCC rule and the service chain control rule to a corresponding network rule enforcement device. Both the PCC policy and the service chain policy are managed by a PCRF entity in a 3GPP network. When PCC policy control information and service chain policy control information are transmitted between the application server and a network side, signaling interaction needs to be performed with only the PCRF. A prior-art problem that signaling resources are excessively occupied because PCC policy control and service chain policy control are separately managed in different networks is resolved. Therefore, signaling resources are saved, and network deployment is optimized.

When the network entity 700 is implemented as the service charging function entity 170 in the network environment shown in FIG. 1, the processor 702 is configured to control the receiver 705 to receive an information query request sent by a policy and charging rules function entity. The information query request is used to request to query service information corresponding to a service policy. The service policy includes at least one network policy. The at least one network policy includes a Policy and Charging Control PCC policy and a service chain policy.

The processor 702 is configured to determine, according to the information query request, the service information corresponding to the service policy. The service information corresponding to the service policy includes at least one of charging information corresponding to the at least one network policy or network resource usage information corresponding to the at least one network policy. The charging information corresponding to the at least one network policy includes charging information corresponding to the PCC policy and charging information corresponding to the service chain policy. The network resource usage information corresponding to the at least one network policy includes network resource usage information corresponding to the PCC policy and network resource usage information corresponding to the service chain policy.

The processor 702 is configured to control the transmitter 704 to return, to the policy and charging rules function entity, the service information corresponding to the service policy.

Optionally, the processor 702 is configured to: before determining, according to the information query request, the service information corresponding to the service policy, control the receiver 705 to receive service information that is corresponding to the PCC policy and that is sent by a policy and charging enforcement function entity. The service information corresponding to the PCC policy includes at least one of the charging information corresponding to the PCC policy or the network resource usage information corresponding to the PCC policy.

Optionally, the processor 702 is configured to: before determining, according to the information query request, the service information corresponding to the service policy, control the receiver 705 to receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain.

Alternatively, the processor 702 is configured to: before determining, according to the information query request, the service information corresponding to the service policy, control the receiver 705 to receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain.

The service information corresponding to the uplink data flow includes at least one of charging information corresponding to the uplink data flow or network resource usage information corresponding to the uplink data flow. The service information corresponding to the downlink data flow includes at least one of charging information corresponding to the downlink data flow or network resource usage information corresponding to the downlink data flow. The service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

Optionally, the information query request includes a service policy identifier corresponding to the service policy. The processor 702 is configured to: before determining, according to the information query request, the service information corresponding to the service policy, control the receiver 705 to receive a correspondence between a network policy identifier of the at least one network policy and the service policy identifier that is of the service policy and that is sent by the PCRF entity.

The processor 702 is configured to determine the network policy identifier of the at least one network policy according to the service policy identifier that is of the service policy and that is included in the information query request and the correspondence between the service policy identifier of the service policy and the network policy identifier of the at least one network policy, and obtain, according to the network policy identifier of the at least one network policy, the service information corresponding to the service policy.

Optionally, the information query request includes a network policy identifier of the at least one network policy. The processor 702 is configured to obtain, according to the network policy identifier of the at least one network policy, the service information corresponding to the service policy.

In conclusion, when the network entity shown in this embodiment of the present invention is implemented as a service charging function entity, the service charging function entity obtains service information from a PCEF, a flow classifier, and a service switch node. When receiving an information query request sent by a PCRF entity, the service charging function entity determines, according to the request, service information that includes: charging information corresponding to a PCC policy, charging information corresponding to a service chain policy, network resource usage information corresponding to the PCC policy, and network resource usage information corresponding to the service chain policy. A service information query related to the PCC policy can be provided; statistics for service information related to the service chain policy can be collected; a query service can be provided, so as to extend system functions.

In addition, the network entity 700 shown in this embodiment of the present invention may be implemented as the PCRF entity 120 or the service charging function entity 170, and may further be implemented as any other network entity in the network environment shown in FIG. 1, for example, be implemented as the application server 110, the PCEF entity 130, the flow classifier 140, the Gi local area network control device 150, the service switch nodes 160, or the like in FIG. 1. In addition, for operation steps performed by the network entity 700 when the network entity 700 is implemented as the foregoing entity, refer to method steps performed by a corresponding entity in the embodiment corresponding to FIG. 4A and FIG. 4B, and details are not described in this embodiment of the present invention.

An embodiment of the present invention further provides a service policy management system. The service policy management system may include a PCEF entity and a service charging function entity. The PCRF entity is the policy and charging rules function entity shown in FIG. 5. The service charging function entity is the service charging function entity shown in FIG. 6. Alternatively, the PCRF entity and the service charging function entity may also be separately implemented as the network entity shown in FIG. 7.

In addition, the service policy management system provided in this embodiment of the present invention may further include an application server, a PCEF entity, a flow classifier, a Gi local area network control device, a service switch node, and the like. Connection relationships between various network entities included in the service policy management system may be shown in FIG. 1, and details are not described again in this embodiment of the present invention.

It should be noted that division of the foregoing function modules are merely examples when various network entities provided in the foregoing embodiments manage or perform a service policy. In actual application, the foregoing functions can be allocated to different modules and implemented according to a requirement, that is, an inner structure of a network entity is divided into different function modules to implement all or some of the functions described above. In addition, the various network entities and the service policy management method embodiments provided in the foregoing embodiments pertain to a same concept. For a specific implementation process of the various network entities and the service policy management method embodiments, refer to the method embodiments. Details are not described herein again.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely examples of embodiments of the present invention, but are not intended to limit the present invention. Any modification, equivalent replacement, and improvement made without departing from the principle of the present invention shall fall within the protection scope of the present invention.

## Claims

1. A policy and charging rules function entity, wherein the policy and charging rules function entity comprises:
a receiving module, configured to receive a service request sent by an application server;
a policy generation module, configured to generate a service policy according to the service request, wherein the service policy comprises at least one network policy, and the at least one network policy comprises a policy and charging control PCC policy and a service chain policy;
a rule generation module, configured to generate a network rule according to the service policy; and
a sending module, configured to send the network rule to a corresponding network rule enforcement device, wherein the network rule is a PCC rule or a service chain control rule, or comprises both a PCC rule and a service chain control rule.

2. The policy and charging rules function entity according to claim 1, wherein
the rule generation module is configured to generate the PCC rule according to the PCC policy; and
the sending module is configured to send the PCC rule to a policy and charging enforcement function entity.

3. The policy and charging rules function entity according to claim 1 or 2, wherein
the rule generation module is configured to generate the service chain control rule according to the service chain policy; and
the sending module is configured to send the service chain control rule to a flow classifier.

4. The policy and charging rules function entity according to any one of claims 1 to 3, wherein the PCC rule comprises a network policy identifier of the PCC policy, and the service chain control rule comprises a network policy identifier of the service chain policy.

5. The policy and charging rules function entity according to any one of claims 1 to 4, wherein the policy and charging rules function entity further comprises:
a path generation module, configured to generate a service chain path corresponding to the service request; wherein
the sending module is configured to send the service chain path to a Gi local area network control device.

6. The policy and charging rules function entity according to any one of claims 1 to 5, wherein
the receiving module is configured to receive a service information query request sent by the application server, wherein the service information query request is used to request to query service information corresponding to the service policy;
the sending module is configured to send an information query request to a service charging function entity, wherein the information query request is used to request to query the service information corresponding to the service policy;
the receiving module is configured to receive the service information that is corresponding to the service policy and that is returned by the service charging function entity according to the information query request; and
the sending module is configured to send, to the application server, the service information corresponding to the service policy, wherein
the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy.

7. The policy and charging rules function entity according to claim 6, wherein
the sending module is configured to send a correspondence between a service policy identifier of the service policy and a network policy identifier of the at least one network policy to the service charging function entity before the receiving module receives the service information query request sent by the application server; and
the sending module is configured to send, to the service charging function entity, an information query request that comprises the service policy identifier, so that the service charging function entity determines, according to the service policy identifier, the service information corresponding to the service policy.

8. The policy and charging rules function entity according to claim 6, wherein
the sending module is configured to send, to the service charging function entity, an information query request that comprises a network policy identifier of the at least one network policy, so that the service charging function entity determines, according to the network policy identifier of the at least one network policy, the service information corresponding to the service policy, wherein
the network policy identifier of the at least one network policy comprises the network policy identifier of the PCC policy and the network policy identifier of the service chain policy.

9. A policy and charging rules function entity, wherein the policy and charging rules function entity comprises: a processor, a memory, a transmitter, and a receiver; the memory is configured to store one or more instructions, wherein the one or more instructions are executed by the processor;
the processor is configured to control the receiver to receive a service request sent by an application server;
the processor is configured to generate a service policy according to the service request, wherein the service policy comprises at least one network policy, and the at least one network policy comprises a policy and charging control PCC policy and a service chain policy;
the processor is configured to generate a network rule according to the service policy; and
the processor is configured to control the transmitter to send the network rule to a corresponding network rule enforcement device, wherein the network rule is a PCC rule or a service chain control rule, or comprises both a PCC rule and a service chain control rule.

10. The policy and charging rules function entity according to claim 9, wherein
the processor is configured to generate the PCC rule according to the PCC policy; and
the processor is configured to control the transmitter to send the PCC rule to a policy and charging enforcement function entity.

11. The policy and charging rules function entity according to claim 9 or 10, wherein
the processor is configured to generate the service chain control rule according to the service chain policy; and
the processor is configured to control the transmitter to send the service chain control rule to a flow classifier.

12. The policy and charging rules function entity according to any one of claims 9 to 11, wherein the PCC rule comprises a network policy identifier of the PCC policy, and the service chain control rule comprises a network policy identifier of the service chain policy.

13. The policy and charging rules function entity according to any one of claims 9 to 12, wherein
the processor is further configured to generate a service chain path corresponding to the service request; and
the processor is configured to control the transmitter to send the service chain path to a Gi local area network control device.

14. The policy and charging rules function entity according to any one of claims 9 to 13, wherein
the processor is configured to control the receiver to receive a service information query request sent by the application server, wherein the service information query request is used to request to query service information corresponding to the service policy;
the processor is configured to control the transmitter to send an information query request to a service charging function entity, wherein the information query request is used to request to query service information corresponding to the service policy;
the processor is configured to control the receiver to receive the service information that is corresponding to the service policy and that is returned by the service charging function entity according to the information query request; and
the processor is configured to control the transmitter to send, to the application server, the service information corresponding to the service policy, wherein
the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy.

15. The policy and charging rules function entity according to claim 14, wherein
the processor is configured to: before controlling the receiver to receive the service information query request sent by the application server, control the transmitter to send a correspondence between a service policy identifier of the service policy and a network policy identifier of the at least one network policy to the service charging function entity; and
the processor is configured to control the transmitter to send, to the service charging function entity, an information query request that comprises the service policy identifier, so that the service charging function entity determines, according to the service policy identifier, the service information corresponding to the service policy.

16. The policy and charging rules function entity according to claim 14, wherein
the processor is configured to control the transmitter to send, to the service charging function entity, an information query request that comprises a network policy identifier of the at least one network policy, so that the service charging function entity determines, according to the network policy identifier of the at least one network policy, the service information corresponding to the service policy, wherein
the network policy identifier of the at least one network policy comprises the network policy identifier of the PCC policy and the network policy identifier of the service chain policy.

17. A service charging function entity, wherein the service charging function entity comprises:
a receiving module, configured to receive an information query request sent by a policy and charging rules function entity, wherein the information query request is used to request to query service information corresponding to a service policy, the service policy comprises at least one network policy, and the at least one network policy comprises a policy and charging control PCC policy and a service chain policy;
a service information determining module, configured to determine, according to the information query request, the service information corresponding to the service policy, wherein the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy; and
a sending module, configured to return, to the policy and charging rules function entity, the service information corresponding to the service policy.

18. The service charging function entity according to claim 17, wherein
the receiving module is configured to: before the service information determining module determines, according to the information query request, the service information corresponding to the service policy, receive service information that is corresponding to the PCC policy and that is sent by a policy and charging enforcement function entity, wherein the service information corresponding to the PCC policy comprises at least one of the charging information corresponding to the PCC policy or the network resource usage information corresponding to the PCC policy.

19. The service charging function entity according to claim 17 or 18, wherein
the receiving module is configured to: before the service information determining module determines, according to the information query request, the service information corresponding to the service policy, receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain; or
the receiving module is configured to: before the service information determining module determines, according to the information query request, the service information corresponding to the service policy, receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, wherein
the service information corresponding to the uplink data flow comprises at least one of charging information corresponding to the uplink data flow or network resource usage information corresponding to the uplink data flow; the service information corresponding to the downlink data flow comprises at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

20. The service charging function entity according to any one of claims 17 to 19, wherein the information query request comprises a service policy identifier corresponding to the service policy;
the receiving module is configured to: before the service information determining module determines, according to the information query request, the service information corresponding to the service policy, receive a correspondence between a network policy identifier of the at least one network policy and the service policy identifier that is of the service policy and that is sent by the PCRF entity; and
the service information determining module is configured to determine the network policy identifier of the at least one network policy according to the service policy identifier that is of the service policy and that is comprised in the information query request and the correspondence between the service policy identifier of the service policy and the network policy identifier of the at least one network policy, and obtain, according to the network policy identifier of the at least one network policy, the service information corresponding to the service policy.

21. The service charging function entity according to any one of claims 17 to 19, wherein the information query request comprises a network policy identifier of the at least one network policy, and
the service information determining module is configured to obtain, according to the network policy identifier of the at least one network policy, the service information corresponding to the service policy.

22. A service charging function entity, wherein the service charging function entity comprises: a processor, a memory, a transmitter, and a receiver; the memory is configured to store one or more instructions, wherein the one or more instructions are executed by the processor;
the processor is configured to control the receiver to receive an information query request sent by a policy and charging rules function entity, wherein the information query request is used to request to query service information corresponding to a service policy, the service policy comprises at least one network policy, and the at least one network policy comprises a policy and charging control PCC policy and a service chain policy;
the processor is configured to determine, according to the information query request, the service information corresponding to the service policy, wherein the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy; and
the processor is configured to control the transmitter to return, to the policy and charging rules function entity, the service information corresponding to the service policy.

23. The service charging function entity according to claim 22, wherein
the processor is configured to: before determining, according to the information query request, the service information corresponding to the service policy, control the receiver to receive service information that is corresponding to the PCC policy and that is sent by a policy and charging enforcement function entity, wherein the service information corresponding to the PCC policy comprises at least one of the charging information corresponding to the PCC policy or the network resource usage information corresponding to the PCC policy.

24. The service charging function entity according to claim 22 or 23, wherein
the processor is configured to: before determining, according to the information query request, the service information corresponding to the service policy, control the receiver to receive service information that is corresponding to an uplink data flow of a service chain corresponding to the service chain policy and that is sent by the last service switch node in the service chain, and receive service information that is corresponding to a downlink data flow of the service chain and that is sent by a flow classifier in the service chain; or
the processor is configured to: before determining, according to the information query request, the service information corresponding to the service policy, control the receiver to receive service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, wherein
the service information corresponding to the uplink data flow comprises at least one of charging information corresponding to the uplink data flow or network resource usage information corresponding to the uplink data flow; the service information corresponding to the downlink data flow comprises at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

25. The service charging function entity according to any one of claims 22 to 24, wherein the information query request comprises a service policy identifier corresponding to the service policy,
the processor is configured to: before determining, according to the information query request, the service information corresponding to the service policy, control the receiver to receive a correspondence between a network policy identifier of the at least one network policy and the service policy identifier that is of the service policy and that is sent by the PCRF entity; and
the processor is configured to determine the network policy identifier of the at least one network policy according to the service policy identifier that is of the service policy and that is comprised in the information query request and the correspondence between the service policy identifier of the service policy and the network policy identifier of the at least one network policy, and obtain, according to the network policy identifier of the at least one network policy, the service information corresponding to the service policy.

26. The service charging function entity according to any one of claims 22 to 24, wherein the information query request comprises a network policy identifier of the at least one network policy, and
the processor is configured to obtain, according to the network policy identifier of the at least one network policy, the service information corresponding to the service policy.

27. A service policy management method, wherein the method comprises:
receiving, by a policy and charging rules function entity, a service request sent by an application server;
generating, by the policy and charging rules function entity, a service policy according to the service request, wherein the service policy comprises at least one network policy, and the at least one network policy comprises a policy and charging control PCC policy and a service chain policy; and
generating, by the policy and charging rules function entity, a network rule according to the service policy, and sending the network rule to a corresponding network rule enforcement device, wherein the network rule is a PCC rule or a service chain control rule, or comprises both a PCC rule and a service chain control rule.

28. The method according to claim 27, wherein the generating, by the policy and charging rules function entity, a network rule according to the service policy, and sending the network rule to a corresponding network rule enforcement device comprises:
generating, by the policy and charging rules function entity, the PCC rule according to the PCC policy, and sending the PCC rule to a policy and charging enforcement function entity.

29. The method according to claim 27 or 28, wherein the generating, by the policy and charging rules function entity, a network rule according to the service policy, and sending the network rule to a corresponding network rule enforcement device comprises:
generating, by the policy and charging rules function entity, a service chain control rule according to the service chain policy, and sending the service chain control rule to a flow classifier.

30. The method according to any one of claims 27 to 29, wherein the PCC rule comprises a network policy identifier of the PCC policy, and the service chain control rule comprises a network policy identifier of the service chain policy.

31. The method according to any one of claims 27 to 30, wherein the method further comprises:
generating, by the policy and charging rules function entity, a service chain path corresponding to the service request, and sending the service chain path to a Gi local area network control device.

32. The method according to any one of claims 27 to 31, wherein the method further comprises:
receiving, by the policy and charging rules function entity, a service information query request sent by the application server, wherein the service information query request is used to request to query service information corresponding to the service policy;
sending, by the policy and charging rules function entity, an information query request to a service charging function entity, wherein the information query request is used to request to query service information corresponding to the service policy;
receiving, by the policy and charging rules function entity, the service information that is corresponding to the service policy and that is returned by the service charging function entity according to the information query request; and
sending, by the policy and charging rules function entity to the application server, the service information corresponding to the service policy, wherein
the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy.

33. The method according to claim 32, wherein before the receiving, by the policy and charging rules function entity, a service information query request sent by the application server, the method further comprising:
sending, by the policy and charging rules function entity, a correspondence between the service policy identifier of the service policy and a network policy identifier of the at least one network policy to the service charging function entity; and
the sending, by the policy and charging rules function entity, an information query request to a service charging function entity comprises:
sending, by the policy and charging rules function entity to the service charging function entity, an information query request that comprises the service policy identifier, so that the service charging function entity determines, according to the service policy identifier, the service information corresponding to the service policy.

34. The method according to claim 32, wherein the sending, by the policy and charging rules function entity, an information query request to a service charging function entity according to the service information query request comprises:
sending, by the policy and charging rules function entity to the service charging function entity, an information query request that comprises a network policy identifier of the at least one network policy, so that the service charging function entity determines, according to the network policy identifier of the at least one network policy, the service information corresponding to the service policy, wherein
the network policy identifier of the at least one network policy comprises the network policy identifier of the PCC policy and the network policy identifier of the service chain policy.

35. A service policy management method, wherein the method comprises:
receiving, by the service charging function entity, an information query request sent by a policy and charging rules function entity, wherein the information query request is used to request to query service information corresponding to a service policy, the service policy comprises at least one network policy, and the at least one network policy comprises a policy and charging control PCC policy and a service chain policy;
determining, by the service charging function entity according to the information query request, the service information corresponding to the service policy, wherein the service information corresponding to the service policy comprises at least one of charging information corresponding to the at least one network policy or network resource usage information corresponding to the at least one network policy, the charging information corresponding to the at least one network policy comprises charging information corresponding to the PCC policy and charging information corresponding to the service chain policy, and the network resource usage information corresponding to the at least one network policy comprises network resource usage information corresponding to the PCC policy and network resource usage information corresponding to the service chain policy; and
returning, by the service charging function entity to the policy and charging rules function entity, the service information corresponding to the service policy.

36. The method according to claim 35, wherein before the determining, by the service charging function entity according to the information query request, the service information corresponding to the service policy, the method further comprises:
receiving, by the service charging function entity, service information that is corresponding to the PCC policy and that is sent by a policy and charging enforcement function entity, wherein the service information corresponding to the PCC policy comprises at least one of the charging information corresponding to the PCC policy or the network resource usage information corresponding to the PCC policy.

37. The method according to claim 35 or 36, wherein before the determining, by the service charging function entity according to the information query request, the service information corresponding to the service policy, the method further comprises:
receiving, by the service charging function entity, service information that is corresponding to an uplink data flow of a service chain corresponding to the service chain policy and that is sent by the last service switch node in the service chain, and receiving service information that is corresponding to a downlink data flow of the service chain and that is sent by a flow classifier in the service chain; or
receiving, by the service charging function entity, service information that is corresponding to an uplink data flow of a service chain corresponding to the service chain policy and that is sent by the last service switch node in the service chain and service information that is corresponding to a downlink data flow of the service chain corresponding to the service chain policy and that is sent by the last service switch node in the service chain, wherein
the service information corresponding to the uplink data flow comprises at least one of charging information corresponding to the uplink data flow or network resource usage information corresponding to the uplink data flow; the service information corresponding to the downlink data flow comprises at least one of charging information corresponding to the downlink data flow or network resource usage information corresponding to the downlink data flow; and the service information corresponding to the uplink data flow and the service information corresponding to the downlink data flow form the network resource usage information corresponding to the service chain policy, or the charging information corresponding to the service chain policy, or both the network resource usage information corresponding to the service chain policy and the charging information corresponding to the service chain policy.

38. The method according to any one of claims 35 to 37, wherein the information query request comprises a service policy identifier corresponding to the service policy, and before the determining, by the service charging function entity according to the information query request, the service information corresponding to the service policy, the method further comprises:
receiving, by the service charging function entity, a correspondence between a network policy identifier of the at least one network policy and the service policy identifier that is of the service policy and that is sent by the PCRF entity; and
the determining, by the service charging function entity according to the information query request, the service information corresponding to the service policy comprises:
determining, by the service charging function entity, the network policy identifier of the at least one network policy according to the service policy identifier that is of the service policy and that is comprised in the information query request and the correspondence between the service policy identifier of the service policy and the network policy identifier of the at least one network policy; and
obtaining, according to the network policy identifier of the at least one network policy, the service information corresponding to the service policy.

39. The method according to any one of claims 35 to 37, wherein the information query request comprises a network policy identifier of the at least one network policy, and
the determining, by the service charging function entity according to the information query request, the service information corresponding to the service policy comprises:
obtaining, by the service charging function entity according to the network policy identifier of the at least one network policy, the service information corresponding to the service policy.

40. A service policy management system, wherein the system comprises:
the policy and charging rules function entity according to any one of claims 1 to 8, and the service charging function entity according to any one of claims 17 to 21; or
the policy and charging rules function entity according to any one of claims 9 to 16, and the service charging function entity according to any one of claims 22 to 26.
